(19) Europäisches Patentamt
European Patent Office
Office européen des brevets

(11) **EP 2 363 677 B1**

(12) **EUROPEAN PATENT SPECIFICATION**

(45) Date of publication and mention
of the grant of the patent:
**24.09.2014 Bulletin 2014/39**

(51) Int Cl.:
*F28D 9/00* *(2006.01)*     *F28F 3/04* *(2006.01)*
*B21D 53/04* *(2006.01)*     *B23K 1/00* *(2006.01)*

(21) Application number: **11001410.7**

(22) Date of filing: **21.02.2011**

(54) **Method of manufacturing plate heat exchanger and plate heat exchanger**

Verfahren zur Herstellung eines Plattenwärmetauschers und Plattenwärmetauscher

Procédé de fabrication d'échangeur thermique de plaque et échangeur thermique de plaque

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2010 JP 2010041185**

(43) Date of publication of application:
**07.09.2011 Bulletin 2011/36**

(73) Proprietor: **Mitsubishi Electric Corporation
Tokyo 100-8310 (JP)**

(72) Inventors:
• **Matsunaga, Kazunori
Tokyo 100-8310 (JP)**
• **Ito, Daisuke
Tokyo 100-8310 (JP)**
• **Kuwahara, Toshiki
Tokyo 100-8310 (JP)**
• **Uchino, Shinichi
Tokyo 100-8310 (JP)**
• **Hayashi, Takehiro
Tokyo 100-8310 (JP)**

(74) Representative: **Pfenning, Meinig & Partner GbR
Patent- und Rechtsanwälte
Theresienhöhe 13
80339 München (DE)**

(56) References cited:
**WO-A1-88/01722**     **JP-A- H07 243 781**

## Description

## Technical Field

This invention relates to a method of manufacturing a plate heat exchanger and a plate heat exchanger.
Document JP-A-7-243 781 discloses a method and a heat exchanger according to the preamble of claims 1 and 6.

## Background Art

A plate heat exchanger includes stacked plates, in each of which a plurality of wave patterns are formed on each heat-transfer surface in order to provide flow passages for a heating medium and a cooling medium (also called a refrigerant). The plates are configured such that part of crest portions of the wave patterns in one of two adjoining plates are in contact with part of trough portions of the wave patterns in the other plate. These contact portions are joined by brazing, and such joint portions are formed over the entire area of each plate, thereby maintaining strength.
On the other hand, near each inlet and outlet of the heating medium and the cooling medium provided in each plate, there is an area where no joint portion of the wave patterns described above can be created because of the need to completely separate the heating medium and the cooling medium. Because of this area, strength is reduced near each inlet and outlet compared to the other area.
Thus, in some conventional heat exchangers, joint portions are formed near each inlet and outlet by making part of the ridge lines of the wave patterns meander or bend (e.g., Patent Literature 1).

## Patent Literature

Patent Literature 1: JP 7-243781 A

## Disclosure of Invention

## Technical Problem

However, in a configuration where part of the ridge lines of the wave patterns is made to meander or bend, there have been problems. The problems include increased susceptibility to fractures at the time of molding and decreased accuracy in size after molding, due to unevenness of stretch at meandered or bent portions of the plates at the time of molding. It has also been a problem that the cost of manufacture of molds for molding the plates is increased due to complexity of the wave patterns.
In this invention, indentations having a depth of 0.05 mm to 0.1 mm are formed at joint portions of wave patterns provided in each plate by applying pressure to a plurality of stacked plates before brazing, in order to increase the contact area between wave patterns to be joined. By performing brazing in this state, the area of joint portions joined by brazing is increased. It is aimed to provide a method of manufacturing a plate heat exchanger with excellent reliability in molding the plates, by using a mold that has increased strength and requires no complex processing because of this increased joint area.

## Solution to Problem

In a method of manufacturing a plate heat exchanger according to this invention, the plate heat exchanger includes a plurality of plates stacked and configured in a rectangular shape having a long side and a short side, each of the plurality of plates having formed therein a wave pattern waving in a stacking direction, wherein

when one side of the stacking direction is defined as a lower side and an other side is defined as an upper side, a lower side plate and an upper side plate adjacent to each other have between them a plurality of intersecting portions at intersections of a plurality of bottom ridge lines representing a bottom of a wave of the upper side plate and a plurality of top ridge lines representing a top of a wave of the lower side plate, and the bottom of the wave of the upper side plate and the top of the wave of the lower side plate are joined by a brazing process at the plurality of intersecting portions, and

the method of manufacturing the plate heat exchanger includes:

a pressure process of forming indentations on the bottom of the wave of the upper side plate and the top of the wave of the lower side plate at least at some of the plurality of intersecting portions by stacking the plurality of plates before the brazing process in a same order as in a completed state and applying pressure thereto in the stacking direction to compress the plurality of stacked plates.

## Advantageous Effects of Invention

This invention can provide a plate heat exchanger to be joined by brazing that is easy to manufacture and offers enhanced pressure resistance performance.

## Brief Description of Drawings

Fig. 1 is a plan view of a plate heat exchanger 100 according to a first embodiment.
Fig. 2 is a cross sectional view of a conventional plate heat exchanger corresponding to the cross section A-A of Fig. 1.
Fig. 3 is a view corresponding to a cross sectional view taken on the line A-A of the plate heat exchanger 100 of the first embodiment (before applying pressure).
Fig. 4 is a view showing a pressure process of the first embodiment.
Fig. 5 is a view showing Fig. 3 after applying pressure.
Fig. 6 is a plan view of the plate heat exchanger 100 of a second embodiment.
Fig. 7 is a cross sectional view taken on the line B-B of the plate heat exchanger 100 of the second embodiment before applying pressure.
Fig. 8 is a cross sectional view taken on the line B-B of the plate heat exchanger 100 of the second embodiment after applying pressure.

**Description of Embodiments**

Embodiment 1

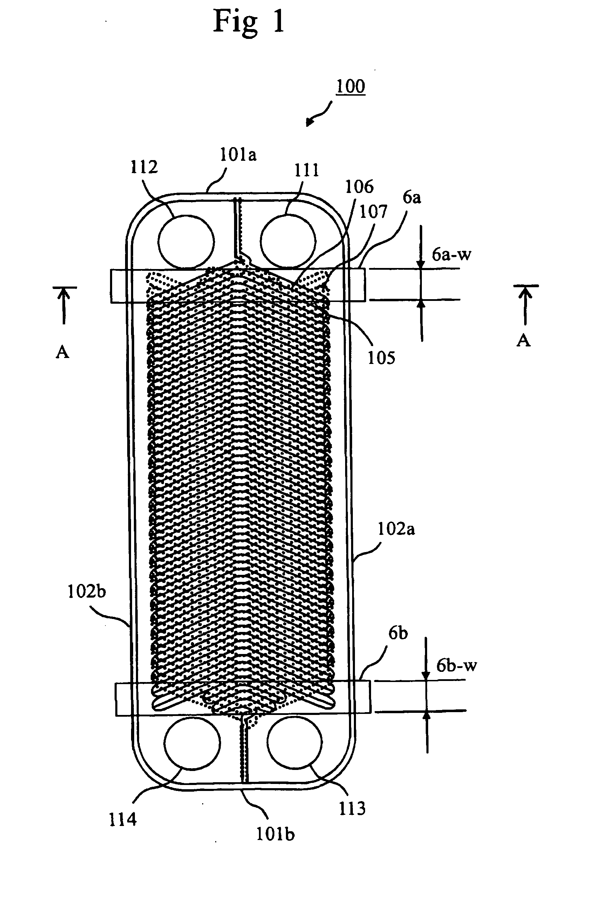

Referring to Figs. 1 to 5, a method of manufacturing a plate heat exchanger 100 according to a first embodiment will be described.

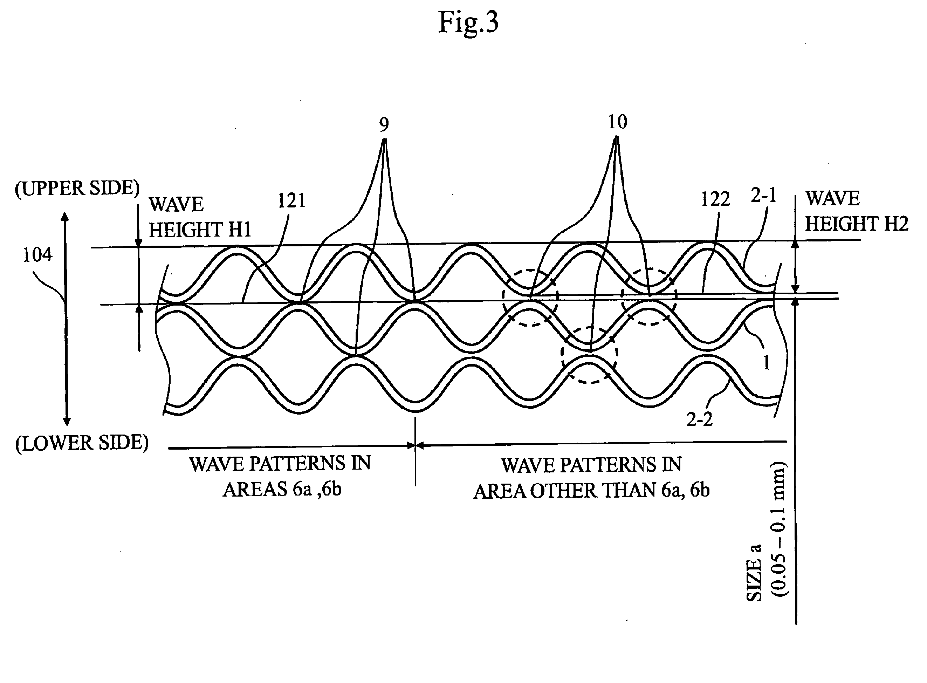

Fig. 1 is a plan view of the plate heat exchanger 100. The configuration of the plate heat exchanger 100 is approximately the same as that of a conventional plate heat exchanger. The difference from the conventional plate heat exchanger lies in that a height difference of "0.05 mm to 0.1 mm" is provided in the height of wave patterns, as shown in Fig. 3 to be described later, and this height difference is offset by a pressure process to be described later in order to enlarge brazing portions between crest portions and trough portions on adjoining plates.

(Configuration of the plate heat exchanger 100)

The plate heat exchanger 100 includes a plurality of plates stacked and configured in a rectangular shape having long sides 102a and 102b and short sides 101 a and 101b. In each of the plurality of plates, wave patterns waving in a stacking direction are formed. In the plate heat exchanger 100, when one side of the stacking direction is defined as a lower side and the other side is defined as an upper side, a lower side plate and an upper side plate adjacent to each other have between them a plurality of intersecting portions 105 at intersections of a plurality of bottom ridge lines 106 representing the bottom of the wave of the upper side plate and a plurality of top ridge lines 107 representing the top of the wave of the lower side plate. Then, the bottom of the wave of the upper side plate and the top of the wave of the lower side plate are joined by a brazing process at the plurality of the intersecting portions 105.
In each plate of the plate heat exchanger 100, near one short side 101a, a cooling medium inlet 111 (an opening) for passing a cooling medium and a heating medium outlet 112 (an opening) for passing a heating medium for heat exchange with the cooling medium are formed across the short side. Near the other short side 101b, a cooling medium outlet 113 (an opening) for passing the cooling medium and a heating medium inlet 114 (an opening) for passing the heating medium are formed across the short side. The wave patterns are formed in an area between a pair of the cooling medium inlet 111 and the heating medium outlet 112 and a pair of the cooling medium outlet 113 and the heating medium inlet 114. The configuration of the plate heat exchanger 100 described so far is the same as that of the conventional plate heat exchanger.

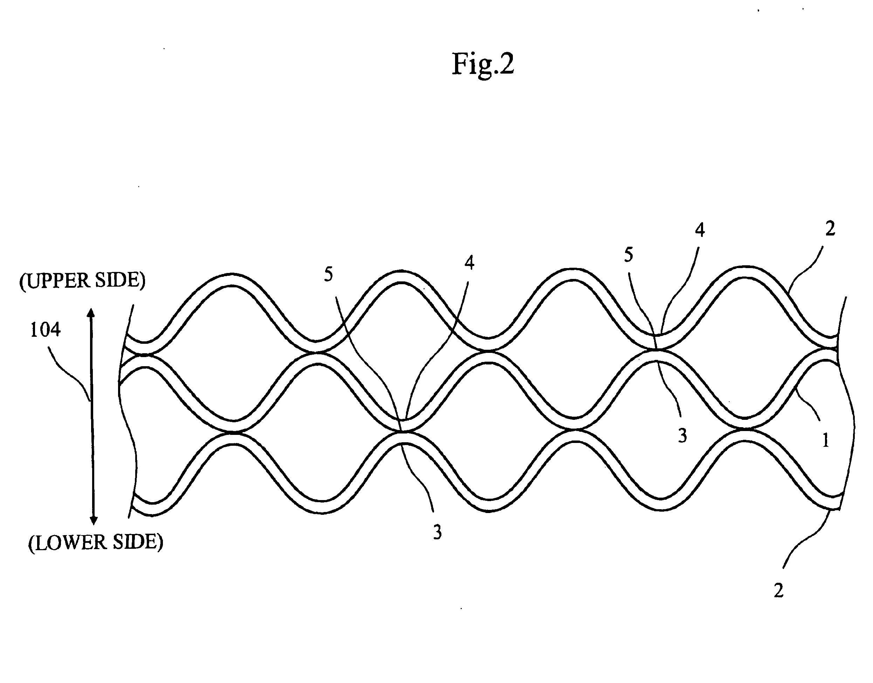

Fig. 2 is a cross sectional view of the conventional plate heat exchanger corresponding to the cross section A-A of Fig. 1.

(Cross section of the conventional plate heat exchanger)

The cross section of Fig. 2 shows the plurality of plates stacked in a stacking direction 104. In two adjoining lower and upper plates 1 and 2, crest portions 3 (top) of the wave patterns formed in one of the plates are in contact with trough portions 4 (bottom) of the wave patterns formed in the other plate at contact points 5. The cross section of the crest portions 3 or the trough portions 4 of the wave patterns formed in the plates 1 and 2 is shaped in an approximately circular arc. Further, the ridge lines of the respective wave patterns of the plates 1 and 2 are formed in mutually intersecting directions, so that the contact points 5 (corresponding to intersecting portions) between the two plates are in point contact.

(Characteristic of the plates of the plate heat exchanger 100)

Fig. 3 shows a cross section of the plate heat exchanger 100 corresponding to the cross section A-A of Fig. 1 before the "pressure process" to be described later. For the purpose of explanation, Fig. 3 shows both the areas 6a and 6b and the area other than the areas 6a and 6b. Thus, Fig. 3 does not show the actual cross section A-A. The plates of the plate heat exchanger 100 are characterized in that, as shown in Fig. 3, a wave height H1 of the wave patterns in the area 6a near the cooling medium inlet 111 and the heating medium outlet 112 (area near the openings) and the area 6b near the cooling medium outlet 113 and the heating medium inlet 114 (area near the openings) is higher (longer) by a "size a" compared to a wave height H2 of the wave patterns in the other area (area other than the areas 6a and 6b). Here, the "size a" is defined as follows:

$$0.05 \text{ mm} \leq a \leq 0.1 \text{ mm}$$

As described above, each plate is characterized in that a bottom position 121 of the wave in a direction from the upper side to the lower side of the stacking direction 104 in the areas 6a and 6b is lower by the "size a" than a bottom position 122 of the wave in the area other than the areas 6a and 6b.

The plate 1 (lower side plate) and the plate 2 (upper side plate) are manufactured by press molding. The above range "0.05 mm to 0.1 mm" of the "size a" can be realized by press molding the plates 1 and 2 in a mold for molding the plates 1 and 2 configured to produce a difference corresponding to "0.05 mm to 0.1 mm" in the height of a place where the wave patterns are molded.

The plates 1 and 2 are configured as described above. Thus, referring to Fig. 3, when a plurality of the plates 1 and 2 are stacked before being brazed as shown in Fig. 1, between two adjoining lower and upper plates 1 and 2, the crest portions of the wave patterns provided in one of the plates are in point contact with the trough portions of the wave patterns of the other plate at contact points 9 in the areas 6a and 6b near each inlet and outlet. On the other hand, wave-patterned portions in the other area have gaps 10 of 0.05 mm to 0.1 mm between the two plates.

Referring to the plate 2-1 in Fig. 3, although the bottom position 121 of the wave in the areas 6a and 6b is lower by the "size a" compared to the area other than the areas 6a and 6b, this is an example. In the plate 2-1 (and in other plates as well), the top position of the wave at the upper side may be higher by the "size a" in an upward direction in the areas 6a and 6b.

(Pressure process)

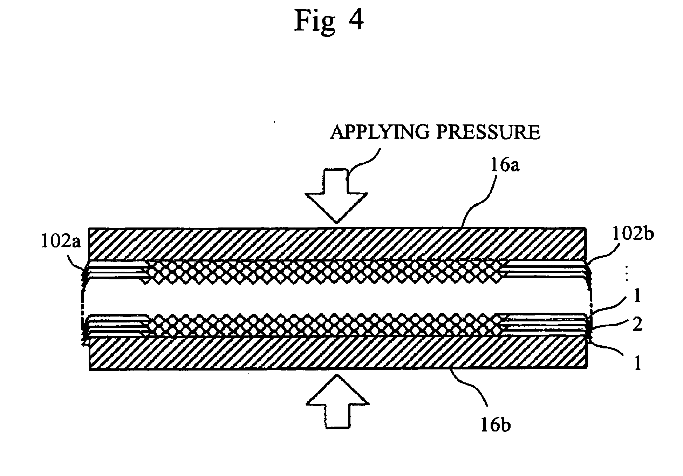

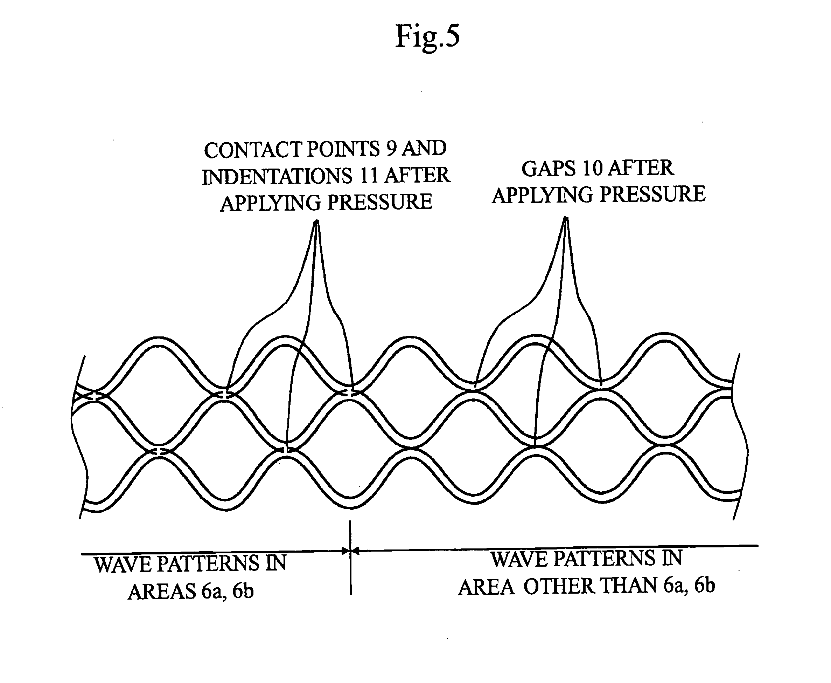

Fig. 4 is a view showing the pressure process. Fig. 5 shows a state of Fig. 3 after the pressure process. Before the brazing process, a required number of the plates 1 and 2 are stacked, and, as shown in Fig. 4, pressure is applied to approximately the entire area of the plates 1 and 2 by using pressure jigs 16a and 16b having a flat surface, while maintaining the parallel positions of the lower and upper surfaces. As shown in Fig. 5, this pressure process causes plastic deformation at the contact points 9 (contact points between the top and the bottom) of the wave patterns in the areas 6a and 6b near each inlet and outlet. As a result, indentations 11 are formed at the contact points 9 on both of the adjoining lower and upper plates, so that the contact state changes to area contact from point contact of before applying pressure.

In this way, before the brazing process, a plurality of the plates are stacked in the same order as in a completed state. Then, by applying pressure in the stacking direction to compress the plurality of the stacked plates, indentations are formed on the bottom of the wave of the upper side plate and the top of the wave of the lower side plate at least at some of a plurality of the contact points (intersecting portions).

(Depth of indentations)

At this time, the depth of the indentations 11 formed by applying pressure should be a depth that approximately offsets the "size a" (0.05 mm to 0.1 mm), i.e., a predetermined difference between the wave height of the wave patterns in the areas 6a and 6b near each inlet and outlet and the wave height of the wave patterns in the other area. This is approximately enough to close the gaps 10 in the area not near each inlet and outlet. Also, by configuring a "size 6a-w" and a "size 6b-w" of the areas 6a and 6b near each inlet and outlet to be 5 to 50 mm from the edge of each inlet and outlet, power required for applying pressure by the pressure jigs 16a and 16b can be reduced.

By stacking the plates 1 and 2 and then applying pressure as described above, the plates are configured to have the indentations 11 to make them fit together. In this state, the plates are taken out of the pressure jigs 16a and 16b to relieve the applied pressure. Then, the plates are brazed by furnace brazing or the like, without changing the stacked order at the time of applying pressure.

As presented above, the plate heat exchanger 100 is configured such that, in the wave patterns formed in each plate, the wave height of the wave patterns near each inlet and outlet of the heating medium and the cooling medium is higher by "0.05 mm to 0.1 mm" than the wave height of the wave patterns in the other area, in order to increase the area of joint portions joined by a brazing material in the wave patterns near each inlet and outlet of the heating medium and the cooling medium compared to the area of joint portions joined by the brazing material in the other area. Then, before brazing, a predetermined number of these plates are stacked and pressure is applied to the stacked plates by using the pressure jigs. Brazing is performed after this pressure process has formed indentations approximately enough to offset the difference in the height of the wave patterns. Thus, because of the indentations 11, area contact occurs at the contact points 9 in the areas 6a and 6b near each inlet and outlet. As a result, due to the brazing material that wetly spreads around the contact points 9 by brazing, the joint strength in the areas 6a and 6b near each inlet and outlet is increased, so that the strength of the plate heat exchanger such as the pressure resistance and the internal pressure fatigue resistance can be increased and quality can be improved. At the time of furnace brazing, other internal parts of the plate heat exchanger to be joined with the plates 1 and 2 can be assembled and brazed together with the plates.

Further, since there are no meandering portions, bending portions, or the like, the molds for molding the plates can be manufactured inexpensively. Also, in the molding of the plates, the cost of manufacture can be reduced because fracture failures are less likely to occur, and so on.

Embodiment 2

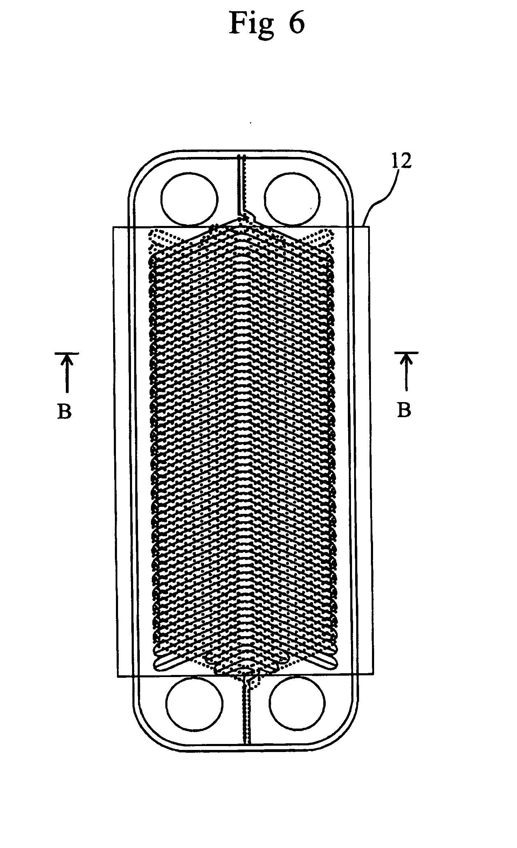

Next, referring to Figs. 6 to 8, a method of manufacturing the plate heat exchanger 100 according to a second embodiment will be described. In the first embodiment described above, the indentations 11 are formed near each inlet and outlet by applying pressure, in order to increase the area joined by brazing and enhance the joint strength. The second embodiment will describe a case in which the strength is enhanced over the entire area of the plates.

Fig. 6 is a schematic view of the plate heat exchanger 100 according to the second embodiment.

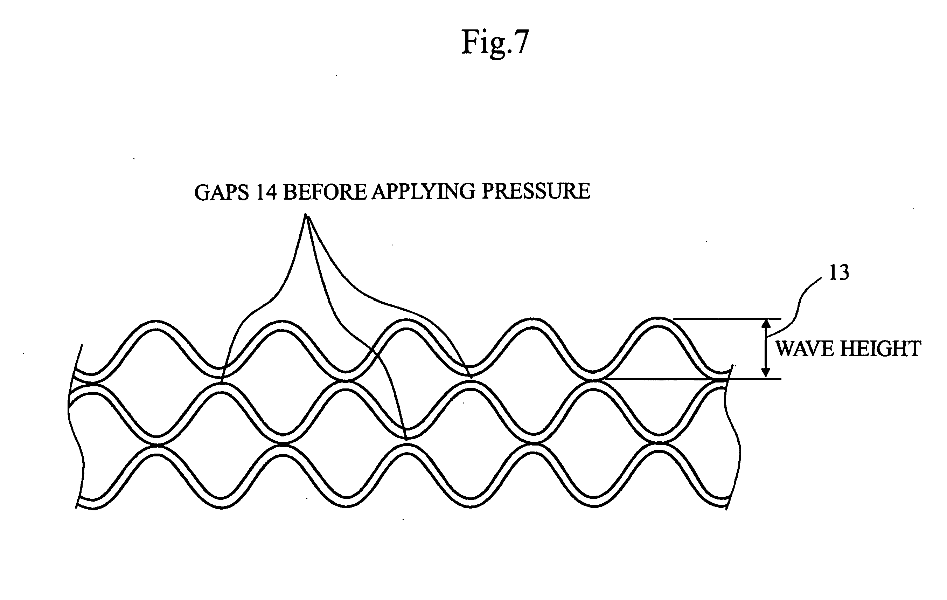

Fig. 7 is a view showing the cross section B-B of Fig. 6 of a plurality of stacked plates before applying pressure.

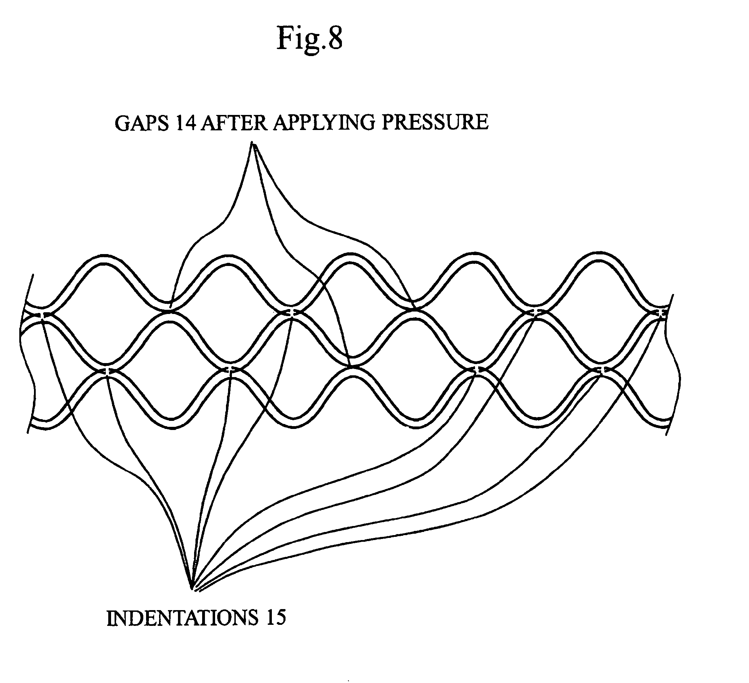

Fig. 8 is a view showing the cross section B-B of Fig. 6 of the plurality of stacked plates after applying pressure.

In Figs. 6 and 7, a wave height 13 of the wave patterns formed in the plates 1 and 2 is ideally approximately uniform over an entire area 12 of the plates. In actuality, however, the wave height 13 includes variations occurring when the plates 1 and 2 are press molded. This causes gaps 14 at contact portions of adjoining wave patterns at places where the wave height 13 is relatively low. Performing brazing in this state tends to reduce the area of joint portions joined by the brazing material at contact portions of the wave patterns where gaps exist. This state occurs at a large number of arbitrary places over the entire area 12 of the plates 1 and 2. At these places, variations occur in the area of joint portions joined by the brazing material, causing variations in the strength of the plate heat exchanger.

(Pressure process)

To solve the above problem, a required number of the plates 1 and 2 are stacked before being brazed. Then, as with the first embodiment as shown in Fig. 4, pressure is applied to approximately the entire area of the plates 1 and 2 by using the pressure jigs 16a and 16b having a flat surface, while maintaining the parallel positions of the lower and upper surfaces. This causes plastic deformation at the contact portions of the wave patterns over approximately the entire area. As a result, indentations 15 are formed at the contact portions in both of adjoining lower and upper plates, so that the contact state changes to area contact from point contact of before applying pressure. Also, by configuring the depth of the indentations 15 formed by applying pressure such that the depth approximately offsets the gaps 14 caused by variations in the wave height 13, the gaps 14 are closed. The appropriate depth of the indentations 15 in this case is "0.05 mm to 0.1 mm", considering the level of variations in the wave height 13 caused by press molding.
In this way, before the brazing process, a plurality of the plates are stacked in the same order as in the completed state. Then, by applying pressure in the stacking direction to compress the plurality of the stacked plates, indentations are formed on the bottom of the wave of the upper side plate and the top of the wave of the lower side plate at least at some of a plurality of the contact points (intersecting portions).

By stacking the plates 1 and 2 and then applying pressure as described above, the plates are configured to have indentations 15 to make them fit together. In this state, the plates are taken out of the pressure jigs 16a and 16b to relieve the applied pressure. Then, the plates are brazed by furnace brazing or the like, without changing the stacked order at the time of applying pressure. In this way, the area of joint portions joined by the brazing material can be increased over approximately the entire area of the plate heat exchanger.

Further, by configuring the gaps 14 caused by variations in the wave height 13 to be closed by applying pressure with the pressure jigs 16a and 16b, variations in the area of joint portions can also be decreased. Thus the joint strength can be increased, and variations in the joint strength can also be decreased, thereby leading to consistency and enhancement of the quality of the plate heat exchanger in terms of strength.

At the time of furnace brazing, other internal parts of the plate heat exchanger to be joined with the plates 1 and 2 by brazing can be assembled with the plates 1 and 2 and brazed together.

**Reference Signs List**

1: plate, 2: plate, 3: crest portions of the wave patterns, 4: trough portions of the wave patterns, 5: contact points, 6a, 6b: areas near each inlet and outlet, 7: wave height, 8: wave height, 9: contact points, 10: gaps, 11: indentations, 12: entire area of the plate, 13: wave height of the wave patterns, 14: gaps, 15: indentations, 16a, 16b: pressure jigs, 100: plate heat exchanger, 101: short sides, 102: long sides, 104: stacking direction, 105: intersecting portions, 106: bottom ridge lines, 107: top ridge lines, 111: cooling medium inlet, 112: heating medium outlet, 113: cooling medium outlet, 114: heating medium inlet, 121, 122: bottom positions

**Claims**

1. A method of manufacturing a plate heat exchanger (100), the plate heat exchanger (100) including a plurality of plates (1, 2-1, 2-2) stacked and configured in a rectangular shape having a long side (102) and a short side (101), each of the plurality of plates (1, 2-1, 2-2) having formed therein a wave pattern waving in a stacking direction (104), wherein
when one side of the stacking direction (104) is defined as a lower side and an other side is defined as an upper side, a lower side plate (1) and an upper side plate (2-1) adjacent to each other have between them a plurality of intersecting portions (105) at intersections of a plurality of bottom ridge lines (106) representing a bottom (4) of a wave of the upper side plate (2-1) and a plurality of top ridge lines (107) representing a top (3) of a wave of the lower side plate (1), and the bottom (4) of the wave of the upper side plate (2-1) and the top (3) of the wave of the lower side plate (1) are joined by a brazing process at the plurality of intersecting portions (105),

**characterized by**

a pressure process of forming indentations (11, 15) on the bottom (4) of the wave of the upper side plate (2-1) and the top (3) of the wave of the lower side plate (1) at least at some of the plurality of intersecting portions (105) by stacking the plurality of plates (1, 2-1, 2-2) before the brazing process in a same order as in a completed state and applying pressure thereto in the stacking direction (104) to compress the plurality of stacked plates (1, 2-1, 2-2).

2. The method of manufacturing the plate heat exchanger of claim 1, wherein

each plate of the plurality of plates (1, 2-1, 2-2) has formed therein, near each of the short side (101) at both ends, two openings (111, 112; 113, 114) arranged side by side across the short side (101), and the each plate also has formed therein the wave pattern between both pairs of the two openings (111, 112; 113, 114) respectively formed near the each of the short side (101) at both ends, and,

in the wave pattern on the each plate of the plurality of plates (1, 2-1, 2-2), a distance H1 of the stacking direction (104) between the bottom (4) of the wave and the top (3) of the wave of the wave pattern in an area near the openings (111, 112; 113, 114), which is an area near each of the two pairs of the two openings (111, 112; 113, 114), is longer by a "size a" than a distance H2 of the stacking direction (104) between the bottom (4) of the wave and the top (3) of the wave of the wave pattern in an area other than the area near the openings (111, 112; 113, 114), and

the pressure process forms the indentations (11, 15) that approximately offset the "size a".

3. The method of manufacturing the plate heat exchanger of claim 2, wherein

in the each plate, a bottom position (4) of the wave in a direction from the upper side to the lower side of the stacking direction (104) in the area near the openings (111, 112; 113, 114) is lower by the "size a" toward the lower side than a bottom position (4) of the wave in the direction from the upper side to the lower side of the stacking direction (104) in the area other than the area near the openings (111, 112; 113, 114).

4. The method of manufacturing the plate heat exchanger of claim 2, wherein

in the each plate, a top position (3) of the wave in a direction from the lower side to the upper side of the stacking direction (104) in the area near the openings (111, 112; 113, 114) is higher by the "size a" toward the upper side than a top position (3) of the wave in the direction from the lower side to the upper side of the stacking direction (104) in the area other than the area near the openings (111, 112; 113, 114).

5. The method of manufacturing the plate heat exchanger of claim 2, wherein

the "size a" is $0.05 \text{ mm} \leq a \leq 0.1 \text{ mm}$.

6. A plate heat exchanger (100) as obtained by the method of claim 1, including a plurality of plates (1, 2-1, 2-2) stacked and configured in a rectangular shape having a long side (102) and a short side (101), each of the plurality of plates (1, 2-1, 2-2) having formed therein a wave pattern waving in a stacking direction (104),

wherein when one side of the stacking direction (104) is defined as a lower side and an other side is defined as an upper side, a lower side plate (1) and an upper side plate (2-1) adjacent to each other have between them a plurality of intersecting portions (105) at intersections of a plurality of bottom ridge lines (106) representing a bottom (4) of a wave of the upper side plate (2-1) and a plurality of top ridge lines (107) representing a top (3) of a wave of the lower side plate (1), and the bottom (4) of the wave of the upper side plate (2-1) and the top (3) of the wave of the lower side plate (1) are joined at the plurality of intersecting portions (105),

**characterized in that**

indentations (11, 15) are formed on the bottom (4) of the wave of the upper side plate (2-1) and the top (3) of the wave of the lower side plate (1) at least at some of the plurality of intersecting portions (105).

**Patentansprüche**

1. Verfahren zum Herstellen eines Plattenwärmetauschers (100), wobei der Plattenwärmetauscher (100) eine Mehrzahl von Platten (1, 2-1, 2-2) einschließt, die geschichtet und in einer rechteckigen Form ausgebildet sind, die eine lange Seite (102) und eine kurze Seite (101) aufweist, wobei jede der Mehrzahl von Platten (1, 2-1, 2-2) mit einem Wellenmuster versehen ist, das sich in Stapelrichtung (104) wellt,

wobei

wenn eine Seite der Stapelrichtung (104) als untere Seite und eine andere Seite als obere Seite definiert ist, eine Platte (1) der unteren Seite und eine Platte (2-1) der oberen Seite, die benachbart zueinander sind, zwischen sich eine Mehrzahl von kreuzenden Bereichen (105) an Kreuzungen einer Mehrzahl von Bodenkantenlinien (106), die einen Boden (4) einer Welle der Platte der oberen Seite (2-1) repräsentieren, und einer Mehrzahl von Oberseitenkantenlinien (107), die die Krone (3) einer Welle der Platte (1) der unteren Seite darstellen, aufweisen, und der Boden (4) der Welle der Platte (2-1) der oberen Seite und die Krone (3) der Welle der Platte (1) der unteren Seite durch einen Schweißprozess an der Mehrzahl von Kreuzungsbereichen (105) verbunden sind, **gekennzeichnet durch**

einen Druckprozess des Bildens von Eindrückungen (11, 15) auf dem Boden (4) der Welle der Platte (2-1) der oberen Seite und der Krone (3) der Welle der Platte (1) der unteren Seite mindestens an einigen der Mehrzahl von Kreuzungsbereichen (105) **durch** Stapeln der Mehrzahl von Platten (1,2-1, 2-2) vor dem Schweißprozess in der gleichen Reihenfolge wie im Endzustand und Aufbringen von Druck darauf in die Stapelrichtung (104), um die Mehrzahl von gestapelten Platten (1, 2-1, 2-2) zu komprimieren.

2. Verfahren zum Herstellen des Plattenwärmetauschers nach Anspruch 1, bei dem
in jeder Platte der Mehrzahl von Platten (1, 2-1, 2-2) nahe jeder ihrer kurzen Seiten (101) an beiden Enden zwei Öffnungen (111, 112; 113, 114) ausgebildet sind, die Seite an Seite über die kurze Seite (101) angeordnet sind, und in jeder Platte auch das Wellenmuster zwischen beiden Paaren der zwei Öffnungen (111, 112; 113, 114) ausgeformt hat, jeweils gebildet nahe jeder der kurzen Seiten (101) an beiden Enden, und,
in dem Wellenmuster auf jeder Platte der Mehrzahl von Platten (1, 2-1, 2-2) ein Abstand H1 der Stapelrichtung (104) zwischen dem Boden (4) der Welle und der Krone (3) der Welle des Wellenmusters in einem Bereich nahe der Öffnungen (111, 112; 113, 114), der ein Bereich nahe jeder der zwei Paare der zwei Öffnungen (111, 112; 113, 114) ist, um eine "Größe a" länger ist als der Abstand H2 der Stapelrichtung (104) zwischen dem Boden (4) der Welle und der Krone (3) der Welle des Wellenmusters in einem anderen Bereich als dem Bereich nahe der Öffnungen (111, 112; 113, 114), und
der Druckprozess die Eindrückungen (11, 15) bildet, die näherungsweise die "Größe a" versetzen.

3. Verfahren zum Herstellen des Plattenwärmetauschers nach Anspruch 2, bei dem
in jeder Platte eine Bodenposition (4) der Welle in einer Richtung von der oberen Seite zu der unteren Seite der Stapelrichtung (104) in dem Bereich nahe der Öffnungen (111, 112; 113, 114) um die "Größe a" niedriger zu der unteren Seite ist als eine Bodenposition (4) der Welle in der Richtung von der oberen Seite zu der unteren Seite der Stapelrichtung (104) in dem Bereich, der nicht der Bereich nahe den Öffnungen (111, 112; 113, 114) ist.

4. Verfahren zum Herstellen des Plattenwärmetauschers nach Anspruch 2, bei dem
in jeder Platte eine Position (3) der Krone der Welle in eine Richtung von der unteren Seite zu der oberen Seite der Stapelrichtung (104) in dem Bereich nahe der Öffnungen (111, 112; 113, 114) um die "Größe a" höher in Richtung der oberen Seite ist als eine Position (3) der Krone der Welle in die Richtung von der unteren Seite zu der oberen Seite der Stapelrichtung (104) in dem Bereich, der nicht der Bereich nahe der Öffnungen (111, 112; 113, 114) ist.

5. Verfahren zum Herstellen des Plattenwärmetauschers nach Anspruch 2, bei dem
die "Größe a" 0,05 mm $\leq$ a $\leq$ 0,1 mm ist.

6. Plattenwärmetauscher (100), wie durch das Verfahren nach Anspruch 1 hergestellt, einschließend eine Mehrzahl von Platten (1, 2-1, 2-2), die gestapelt und in einer rechteckigen Form mit einer langen Seite (102) und einer kurzen Seite (101) ausgebildet sind, wobei jede der Mehrzahl von Platten (1, 2-1, 2-2) darin ein Wellenmuster geformt hat, das sich in eine Stapelrichtung (104) wellt,
wobei,
wenn eine Seite der Stapelrichtung (104) als untere Seite und eine andere Seite als obere Seite definiert sind, eine Platte (1) der unteren Seite und eine Platte (2-1) der oberen Seite, die benachbart zueinander sind, zwischen sich eine Mehrzahl von kreuzenden Bereichen (105) an Kreuzungen einer Mehrzahl von Bodenkantenlinien (106), die einen Boden (4) einer Welle der Platte der oberen Seite (2-1) repräsentieren, und einer Mehrzahl von Oberseitenkantenlinien (107), die die Krone (3) einer Welle der Platte (1) der unteren Seite darstellen, aufweisen und der Boden (4) der Welle der Platte (2-1) der oberen Seite und die Krone (3) der Welle der Platte (1) der unteren Seite an der Mehrzahl von Kreuzungsbereichen (105) verbunden sind,
**dadurch gekennzeichnet, dass**
Eindrückungen (11, 15) in dem Boden (4) der Welle der Platte (2-1) der oberen Seite und der Krone (3) der Welle der Platte (1) der unteren Seite mindestens an einigen der Mehrzahl von Kreuzungsbereichen (105) geformt sind.

**Revendications**

1. Procédé de fabrication d'un échangeur thermique de plaque (100), l'échangeur thermique de plaque (100) comprenant une pluralité de plaques (1, 2-1, 2-2) empilées et configurées en une forme rectangulaire ayant un côté long (102) et un côté court (101), un motif d'ondulations ondulant dans une direction d'empilage (104) étant formé dans chacune de la pluralité de plaques (1, 2-1, 2-2), dans lequel

lorsqu'un côté dans la direction d'empilage (104) est défini en tant que côté inférieur et qu'un autre côté est défini en tant que côté supérieur, une plaque latérale inférieure (1) et une plaque latérale supérieure (2-1) adjacentes l'une à l'autre ont entre elles une pluralité de parties d'intersection (105) au niveau des intersections d'une pluralité de lignes d'arête inférieures (106) représentant une partie inférieure (4) d'une ondulation de la plaque latérale supérieure (2-1) et d'une pluralité de lignes d'arête supérieures (107) représentant une partie supérieure (3) d'une ondulation de la plaque latérale inférieure (1) et la partie inférieure (4) de l'ondulation de la plaque latérale supérieure (2-1) et la partie supérieure (3) de l'ondulation de la plaque latérale inférieure (1) sont jointes par un processus de brasage au niveau de la pluralité de parties d'intersection (105),
**caractérisé par**
un processus de pression pour former des indentations (11, 15) sur la partie inférieure (4) de l'ondulation de la plaque latérale supérieure (2-1) et sur la partie supérieure (3) de l'ondulation de la plaque latérale inférieure (1) au moins au niveau de certaines de la pluralité de parties d'intersection (105) en empilant la pluralité de plaques (1, 2-1, 2-2) avant le processus de brasage dans le même ordre que dans un état achevé et en appliquant une pression à celles-ci dans la direction d'empilage (104) pour comprimer la pluralité de plaques (1, 2-1, 2-2) empilées.

2. Procédé de fabrication de l'échangeur thermique de plaque selon la revendication 1, dans lequel deux ouvertures (111, 112 ; 113, 114) agencées côte à côte en travers du côté court (101) sont formées dans chaque plaque de la pluralité de plaques (1, 2-1, 2-2), à proximité de chacun des côtés courts (101) aux deux extrémités et le motif d'ondulations est également formé dans chaque plaque entre les deux paires de deux ouvertures (111, 112 ; 113, 114) respectivement formées à proximité de chacun des côtés courts (101) aux deux extrémités, et
dans le motif d'ondulations sur chaque plaque de la pluralité de plaques (1, 2-1, 2-2), une distance H1 dans la direction d'empilage (104) entre la partie inférieure (4) de l'ondulation et la partie supérieure (3) de l'ondulation du motif d'ondulations dans une zone à proximité des ouvertures (111, 112 ; 113, 114), qui est une zone à proximité de chacune des deux paires de deux ouvertures (111, 112 ; 113, 114), est plus grande d'une « taille a » qu'une distance H2 dans la direction d'empilage (104) entre la partie inférieure (4) de l'ondulation et la partie supérieure (3) de l'ondulation du motif d'ondulations dans une zone autre que la zone à proximité des ouvertures (111, 112 ; 113, 114), et
le processus de pression forme les indentations (11, 15) qui sont décalées approximativement de la « taille a ».

3. Procédé de fabrication de l'échangeur thermique de plaque selon la revendication 2, dans lequel dans chaque plaque, une position inférieure (4) de l'ondulation dans une direction du côté supérieur vers le côté inférieur dans la direction d'empilage (104) dans la zone à proximité des ouvertures (111, 112 ; 113, 114) est plus basse d'une « taille a » vers le côté inférieur qu'une position inférieure (4) de l'ondulation dans la direction du côté supérieur vers le côté inférieur dans la direction d'empilage (104) dans la zone autre que la zone à proximité des ouvertures (111, 112 ; 113, 114).

4. Procédé de fabrication de l'échangeur thermique de plaque selon la revendication 2, dans lequel dans chaque plaque, une position supérieure (3) de l'ondulation dans une direction du côté inférieur vers le côté supérieur dans la direction d'empilage (104) dans la zone à proximité des ouvertures (111, 112 ; 113, 114) est plus haute de la « taille a » vers le côté supérieur qu'une position supérieure (3) de l'ondulation dans la direction du côté inférieur vers le côté supérieur dans la direction d'empilage (104) dans la zone autre que la zone à proximité des ouvertures (111, 112 ; 113, 114).

5. Procédé de fabrication de l'échangeur thermique de plaque selon la revendication 2, dans lequel la « taille a » est 0,05 mm ≤ a ≤ 0,1 mm.

6. Échangeur thermique de plaque (100) tel qu'obtenu par le procédé de la revendication 1, comprenant une pluralité de plaques (1, 2-1, 2-2) empilées et configurées en une forme rectangulaire ayant un côté long (102) et un côté court (101), un motif d'ondulations ondulant dans une direction d'empilage (104) étant formé dans chacune de la pluralité de plaques (1, 2-1, 2-2),
dans lequel, lorsqu'un côté dans la direction d'empilage (104) est défini en tant que côté inférieur et qu'un autre côté est défini en tant que côté supérieur, une plaque latérale inférieure (1) et une plaque latérale supérieure (2-1) adjacentes l'une à l'autre ont entre elles une pluralité de parties d'intersection (105) au niveau des intersections d'une pluralité de lignes d'arête inférieures (106) représentant une partie inférieure (4) d'une ondulation de la plaque latérale supérieure (2-1) et d'une pluralité de lignes d'arête supérieures (107) représentant une partie supérieure (3) d'une ondulation de la plaque latérale inférieure (1) et la partie inférieure (4) de l'ondulation de la plaque latérale supérieure (2-1) et la partie supérieure (3) de l'ondulation de la plaque latérale inférieure (1) sont jointes au niveau de la pluralité de parties d'intersection (105),
**caractérisé en ce que**
des indentations (11, 15) sont formées sur la partie inférieure (4) de l'ondulation de la plaque latérale supérieure (2-1) et sur la partie supérieure (3) de l'ondulation de la plaque latérale inférieure (1) au moins au niveau de certaines de la pluralité de parties d'intersection (105).

# Fig 1

100

Fig.2

# Fig.3

EP 2 363 677 B1

# Fig 4

APPLYING PRESSURE

16a

102a

102b

1

2

1

16b

# Fig.5

CONTACT POINTS 9 AND
INDENTATIONS 11 AFTER
APPLYING PRESSURE

GAPS 10 AFTER
APPLYING PRESSURE

WAVE PATTERNS IN
AREAS 6a, 6b

WAVE PATTERNS IN
AREA OTHER THAN 6a, 6b

EP 2 363 677 B1

# Fig 6

## Fig.7

GAPS 14 BEFORE APPLYING PRESSURE

WAVE HEIGHT

13

EP 2 363 677 B1

Fig.8

GAPS 14 AFTER APPLYING PRESSURE

INDENTATIONS 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7243781 A